# EUROPEAN PATENT APPLICATION

(11) **EP 4 723 447 A1**
(43) Date of publication of application: **08.04.2026**
(21) Application number: 23939686.4
(22) Date of filing: 01.06.2023
(51) Int. Cl.: H02K 16/02

(54) **MAGNETIC GEARED ROTATING ELECTRICAL MACHINE**

(71) Applicant: MITSUBISHI ELECTRIC CORPORATION, Chiyoda-ku Tokyo 100-8310 (JP)
(72) Inventor: MIYATAKE, Ryoji, Tokyo 100-8310 (JP); YAMASAKI, Ryuji, Tokyo 100-8310 (JP); UCHIDA, Yosuke, Tokyo 100-8310 (JP); YAMAMOTO, Atsushi, Tokyo 100-8310 (JP)
(74) Representative: Mewburn Ellis LLP
(86) International application number: PCT/JP2023/020432
(87) International publication number: WO 2024/247211

(57) **Abstract**

Provided is a magnetic geared rotary machine including a low-speed rotor with improved long-term reliability. A low-speed rotor (3) includes a plurality of magnetic-pole pieces (32) and spacers (33) arranged alternately in contact with each other in a circumferential direction. Each of the spacers includes a radially outer spacer (33a) and a radially inner spacer (33b). The radially outer spacers and the radially inner spacers are fastened together in a radial direction by spacer fastening bolts (34). Side surfaces of the magnetic-pole pieces that are in contact with the radially outer spacers form radially outer inclined surfaces (32a) such that a circumferential-direction distance between adjacent ones of the magnetic-pole pieces is increased toward a radially outer side. Side surfaces of the magnetic-pole pieces that are in contact with the radially inner spacers form radially inner inclined surfaces (32b) such that a circumferential-direction distance between adjacent ones of the magnetic-pole pieces is increased toward a radially inner side.

## Description

### TECHNICAL FIELD

The present disclosure relates to a magnetic geared rotary machine.

### BACKGROUND ART

In wind power generation, tidal power generation, and the like, a magnetic geared rotary machine is used as a generator that converts kinetic energy obtained from a turbine into electrical energy. The magnetic geared rotary machine is composed of three cylindrical portions arranged coaxially. For example, in a case where the magnetic geared rotary machine is used as a generator, an inner cylindrical portion serves as a high-speed rotor including a permanent magnet, an intermediate cylindrical portion serves as a low-speed rotor including a magnetic-pole piece, and an outer cylindrical portion serves as a stator including a permanent magnet and an armature winding.

The low-speed rotor of the magnetic geared rotary machine is configured such that magnetic-pole pieces made of magnetic material and spacers made of non-magnetic material are arranged alternately in the circumferential direction. In order to increase the transmission torque of a magnetic gear, the width in the radial direction of the low-speed rotor is set to be as small as possible. For example, even in the magnetic geared rotary machine having an overall diameter of several meters, the transmission torque of the magnetic gear can be increased by setting the width in the radial direction of the low-speed rotor to be several tens of millimeters. Thus, the low-speed rotor is required to have stiffness against electromagnetic force and centrifugal force.

As a conventional magnetic geared rotary machine that includes a low-speed rotor having increased stiffness, a configuration in which magnetic-pole pieces and spacers of the low-speed rotor are divided in the axial direction, and are fixed in the axial direction such that a centering is interposed therebetween, is disclosed (e.g., see Patent Document 1). In addition, as another magnetic geared rotary machine, a configuration in which an annular member is disposed on at least one of the radially inner side and the radially outer side relative to magnetic-pole pieces and spacers of a low-speed rotor, is disclosed (e.g., see Patent Document 2).

### CITATION LIST

### PATENT DOCUMENT

Patent Document 1: Japanese Laid-Open Patent Publication No. 2010-17030
Patent Document 2: Japanese Laid-Open Patent Publication No. 2021-101116

### SUMMARY OF THE INVENTION

### PROBLEM TO BE SOLVED BY THE INVENTION

In the conventional magnetic geared rotary machine, compression force is applied to the magnetic-pole pieces and the spacers of the low-speed rotor in the axial direction and the radial direction, thereby improving the stiffness of the low-speed rotor. However, in the conventional magnetic geared rotary machine, the relative vibration generated between the magnetic-pole pieces and the spacers of the low-speed rotor cannot be suppressed. Thus, in the conventional magnetic geared rotary machine, long-term reliability may be reduced due to wear and the like caused by the relative vibration generated between the magnetic-pole pieces and the spacers of the low-speed rotor.

The present disclosure has been made to solve the above problem, and an object of the present disclosure is to provide a magnetic geared rotary machine in which the relative vibration generated between magnetic-pole pieces and spacers of a low-speed rotor is suppressed to improve long-term reliability.

### MEANS TO SOLVE THE PROBLEM

The present disclosure is directed to a magnetic geared rotary machine in which a stator including a stator core, a stator winding, and a stator magnet, a low-speed rotor including a magnetic-pole piece and a spacer, and a high-speed rotor including a rotor core and a rotor magnet are coaxially arranged with gaps therebetween, wherein the low-speed rotor includes a plurality of the magnetic-pole pieces and a plurality of the spacers arranged alternately in contact with each other in a circumferential direction, each of the spacers includes a radially outer spacer and a radially inner spacer, the radially outer spacers and the radially inner spacers are fastened together in a radial direction by spacer fastening bolts, side surfaces of the magnetic-pole pieces that are in contact with the radially outer spacers form radially outer inclined surfaces such that a circumferential-direction distance between adjacent ones of the magnetic-pole pieces is increased toward a radially outer side, and side surfaces of the magnetic-pole pieces that are in contact with the radially inner spacers form radially inner inclined surfaces such that a circumferential-direction distance between adjacent ones of the magnetic-pole pieces is increased toward a radially inner side.

### EFFECT OF THE INVENTION

In the magnetic geared rotary machine of the present disclosure, the low-speed rotor includes the plurality of magnetic-pole pieces and the plurality of spacers arranged alternately in contact with each other in the circumferential direction, each of the spacers includes the radially outer spacer and the radially inner spacer, the radially outer spacers and the radially inner spacers are fastened together in the radial direction by the spacer fastening bolts, the side surfaces of the magnetic-pole pieces that are in contact with the radially outer spacers form radially outer inclined surfaces such that the circumferential-direction distance between adjacent ones of the magnetic-pole pieces is increased toward the radially outer side, and the side surfaces of the magnetic-pole pieces that are in contact with the radially inner spacers form radially inner inclined surfaces such that the circumferential-direction distance between adjacent ones of the magnetic-pole pieces is increased toward the radially inner side. Therefore, the relative vibration generated between the magnetic-pole pieces and the spacers of the low-speed rotor can be suppressed, and long-term reliability can be improved.

### BRIEF DESCRIPTION OF THE DRAWINGS

[FIG. 1] FIG. 1 is a perspective view of a magnetic geared rotary machine according to embodiment 1.
[FIG. 2] FIG. 2 is a perspective view of a stator, a low-speed rotor, and a high-speed rotor according to embodiment 1.
[FIG. 3] FIG. 3 is an enlarged cross-sectional view of the low-speed rotor according to embodiment 1.
[FIG. 4] FIG. 4 is an enlarged top view of the low-speed rotor according to embodiment 1.
[FIG. 5] FIG. 5 illustrates a manufacturing process of the low-speed rotor according to embodiment 3.
[FIG. 6] FIG. 6 is an enlarged top view of a low-speed rotor according to embodiment 2.
[FIG. 7] FIG. 7 is a cross-sectional view of the low-speed rotor according to embodiment 2.
[FIG. 8] FIG. 8 is a cross-sectional view of the low-speed rotor according to embodiment 2.
[FIG. 9] FIG. 9 is a cross-sectional view of a magnetic geared rotary machine according to embodiment 2.
[FIG. 10] FIG. 10 is an enlarged top view of a low-speed rotor according to embodiment 3.
[FIG. 11] FIG. 11 is a cross-sectional view of the low-speed rotor according to embodiment 3.
[FIG. 12] FIG. 12 is a cross-sectional view of the low-speed rotor according to embodiment 3.
[FIG. 13] FIG. 13 is an enlarged top view of a low-speed rotor according to embodiment 4.
[FIG. 14] FIG. 14 is a cross-sectional view of the low-speed rotor according to embodiment 4.
[FIG. 15] FIG. 15 is a cross-sectional view of the low-speed rotor according to embodiment 4.
[FIG. 16] FIG. 16 is an enlarged top view of a low-speed rotor according to embodiment 5.
[FIG. 17] FIG. 17 is a cross-sectional view of the low-speed rotor according to embodiment 5.
[FIG. 18] FIG. 18 is a cross-sectional view of the low-speed rotor according to embodiment 5.
[FIG. 19] FIG. 19 is a cross-sectional view of a magnetic geared rotary machine according to embodiment 5.
[FIG. 20] FIG. 20 illustrates a manufacturing process of the low-speed rotor according to embodiment 5.
[FIG. 21] FIG. 21 is an enlarged top view of a low-speed rotor according to embodiment 6.
[FIG. 22] FIG. 22 is a cross-sectional view of the low-speed rotor according to embodiment 6.
[FIG. 23] FIG. 23 is a cross-sectional view of the low-speed rotor according to embodiment 6.

### DESCRIPTION OF EMBODIMENTS

Hereinafter, magnetic geared rotary machines according to embodiments for carrying out the present disclosure will be described in detail with reference to the drawings. In the drawings, the same reference characters denote the same or corresponding parts.

### Embodiment 1

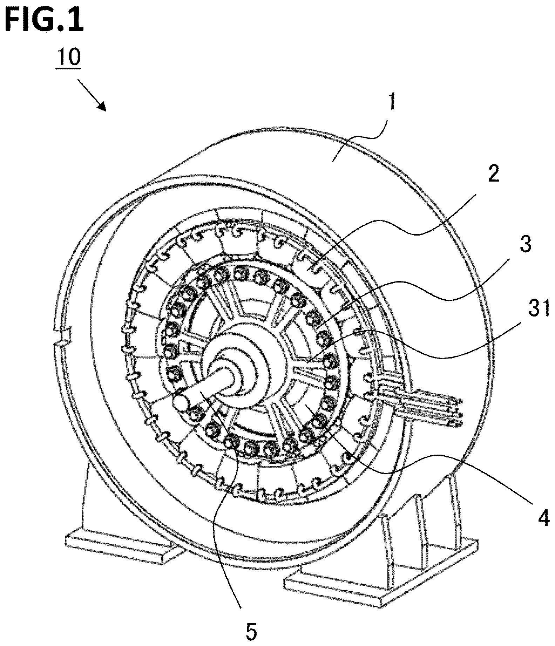

FIG. 1 is a perspective view of a magnetic geared rotary machine according to embodiment 1. A magnetic geared rotary machine 10 of the present embodiment includes a frame 1 having a cylindrical shape, a stator 2, a low-speed rotor 3, a high-speed rotor 4, and a rotary shaft 5. The stator 2, the low-speed rotor 3, and the high-speed rotor 4 are arranged coaxially with respect to the rotary shaft 5. The stator 2 is fixed to the frame 1. The high-speed rotor 4 is fixed to the rotary shaft 5. The rotary shaft 5 is supported rotatably relative to the frame 1 via bearings which are not shown. The low-speed rotor 3 is rotatably supported on the rotary shaft 5 via bearings provided to low-speed rotor end plates 31. Hereinafter, a direction parallel to the rotary shaft 5 is referred to as axial direction, a direction orthogonal to the rotary shaft 5 is referred to as radial direction, and a direction of rotation around the rotary shaft 5 is referred to as circumferential direction. In the radial direction, a direction away from the rotary shaft 5 is referred to as radially outer side, while the opposite direction is referred to as radially inner side.

In a case where the magnetic geared rotary machine of the present embodiment is a used as a generator for wind power generation, due to the rotation of the wind turbine, the low-speed rotor 3 rotates and the high-speed rotor 4 rotates at an increased speed, whereby induced current flows through a stator coil of the stator 2. In the magnetic geared rotary machine 10 of the present embodiment, the high-speed rotor 4 may be rotatably supported on the rotary shaft 5 via bearings from a fixed portion such as a frame. Alternatively, the high-speed rotor 4 may be rotatably supported on the rotary shaft 5 via the bearings from the low-speed rotor.

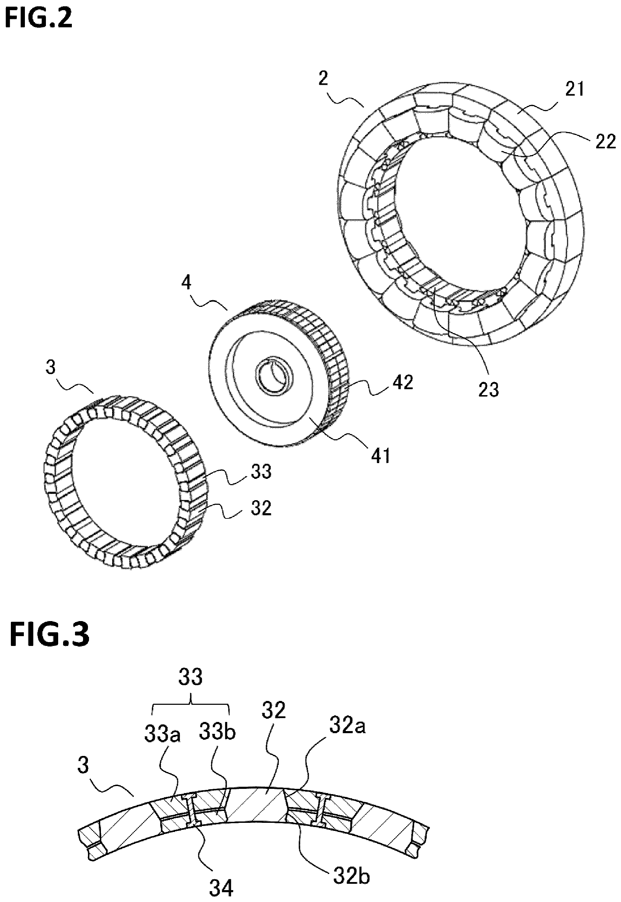

FIG. 2 is a perspective view of the stator, the low-speed rotor, and the high-speed rotor according to the present embodiment. FIG. 2 shows the stator 2, the low-speed rotor 3, and the high-speed rotor 4 according to the present embodiment, which are separated in the axial direction. The stator 2 includes a stator core 21 having a plurality of slots in the circumferential direction, and a stator winding 22 and a stator magnet 23 disposed in each slot. The stator 2 is fixed to the radially inner side of the frame 1. The low-speed rotor 3 has a cylindrical shape and is disposed radially inward of the stator 2 with a gap therebetween. The low-speed rotor 3 includes a plurality of magnetic-pole pieces 32 and a plurality of spacers 33 arranged alternately in the circumferential direction. The high-speed rotor 4 is disposed radially inward of a low-speed rotor core with a gap therebetween. The high-speed rotor 4 includes a high-speed rotor core 41 having a cylindrical shape, and rotor magnets 42 disposed on the outer circumferential surface of the high-speed rotor core 41 so as to be arranged in the circumferential direction. In FIG. 2, the rotary shaft 5 fixed to the high-speed rotor core 41 is not shown. In addition, only the basic structure of the low-speed rotor 3 is shown in FIG. 2.

The stator core 21 of the stator 2 and the magnetic-pole pieces 32 of the low-speed rotor 3 are each formed of, for example, laminated electrical steel sheets. The spacers 33 of the low-speed rotor 3 are made of non-magnetic material such as stainless steel or resin. In addition, the stator magnets 23 of the stator 2 and the rotor magnets 42 of the high-speed rotor 4 are permanent magnets. Further, the stator windings 22 of the stator 2 are each formed of copper, copper alloy, aluminum, or similar conductor with an insulation coating.

FIG. 3 is an enlarged cross-sectional view of the low-speed rotor according to the present embodiment. FIG. 3 is an enlarged view of a part of the low-speed rotor 3. In the low-speed rotor 3 of the present embodiment, the spacers 33 arranged between the magnetic-pole pieces 32 each include a radially outer spacer 33a and a radially inner spacer 33b. In addition, side surfaces of the magnetic-pole pieces 32 that are in contact with the radially outer spacers 33a form radially outer inclined surfaces 32a such that the circumferential-direction distance between adjacent ones of the magnetic-pole pieces is increased toward the radially outer side. Further, side surfaces of the magnetic-pole piece 32 that are in contact with the radially inner spacers 33b form radially inner inclined surfaces 32b such that the circumferential distance between adjacent ones of the magnetic-pole pieces is increased toward the radially inner side. As shown in FIG. 3, the radially outer spacers 33a and the radially inner spacers 33b are fastened together by spacer fastening bolts 34. Although not shown, in order to electrically insulate each magnetic-pole piece 32 from each spacer 33, an insulating material is provided between the contacting surfaces of the magnetic-pole piece 32 and the spacer 33.

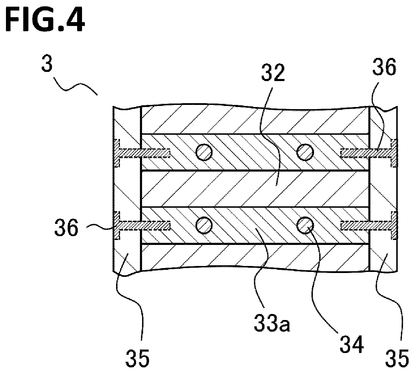

FIG. 4 is an enlarged top view of the low-speed rotor according to the present embodiment. FIG. 4 is a top view of the low-speed rotor 3 as seen from the radially outer side, and is an enlarged view of a part of the low-speed rotor 3. In FIG. 4, the left-right direction is the axial direction, the up-down direction is the circumferential direction, and a direction perpendicular to the drawing sheet is the radial direction. In the low-speed rotor 3, the plurality of magnetic-pole pieces 32 and the plurality of spacers 33 arranged alternately in the circumferential direction are retained between end rings 35 disposed at the ends in the axial direction. One of each radially outer spacer 33a and each radially inner spacer 33b fastened together by the spacer fastening bolt 34 is fixed to the end rings 35 by axial fastening bolts 36. That is, each spacer 33 is fixed to the end rings 35 by the axial fastening bolts 36.

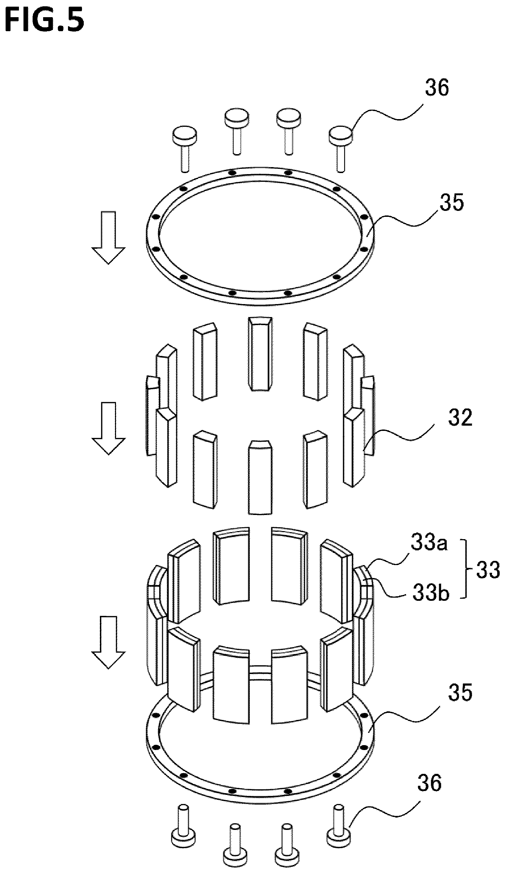

FIG. 5 illustrates a manufacturing process of the low-speed rotor in the present embodiment. As shown in FIG. 5, first, the spacers 33 are fastened to the lower end ring 35 in the axial direction. At this time, the spacers 33 are fastened to the end ring 35 in the axial direction by the axial fastening bolts 36. Although not shown, the radially outer spacers 33a and the radially inner spacers 33b composing the spacers 33 are fastened together by the spacer fastening bolts 34 to an extent that the radially outer spacers 33a and the radially inner spacers 33b do not separate. Next, the magnetic-pole pieces 32 are inserted between the spacers 33 fastened to the end ring 35 in the axial direction. Next, the upper end ring 35 is disposed on the spacers 33 and the magnetic-pole pieces 32. Next, the upper end ring 35 is fastened to the spacers 33 in the axial direction by the axial fastening bolts 36. Finally, the radially outer spacers 33a and the radially inner spacers 33b are firmly fastened together by the spacer fastening bolts 34.

In the low-speed rotor 3 configured as described above, the spacers 33 are fastened in the axial direction by the axial fastening bolts 36, thereby improving stiffness in the axial direction. In addition, the radially outer spacers 33a and the radially inner spacers 33b are fastened together in the radial direction by the spacer fastening bolts 34, thereby improving stiffness in the radial direction.

Further, in the low-speed rotor 3 of the present embodiment, the side surfaces of the magnetic-pole pieces 32 that are in contact with the radially outer spacers 33a form the radially outer inclined surfaces 32a such that the circumferential-direction distance between adjacent ones of the magnetic-pole pieces is increased toward the radially outer side. Further, the side surfaces of the magnetic-pole pieces 32 that are in contact with the radially inner spacers 33b form the radially inner inclined surfaces 32b such that the circumferential-direction distance between adjacent ones of the magnetic-pole pieces is increased toward the radially inner side. Thus, when the radially outer spacers 33a and the radially inner spacers 33b are fastened together in the radial direction by the spacer fastening bolts 34, the radially outer spacers 33a and the radially inner spacers 33b expand in the circumferential direction. Thus, circumferential compression force acts on the magnetic-pole pieces 32. As a result, the relative vibration generated between the magnetic-pole pieces 32 and the spacers 33 can be suppressed.

In the low-speed rotor of the present embodiment, the end rings are disposed at the ends in the axial direction. The low-speed rotor end plates may serve as the end rings. In addition, in the low-speed rotor of the present embodiment, each spacer is divided into two pieces: the radially outer spacer and the radially inner spacer. The spacer may be divided into three or more pieces in the radial direction.

### Embodiment 2

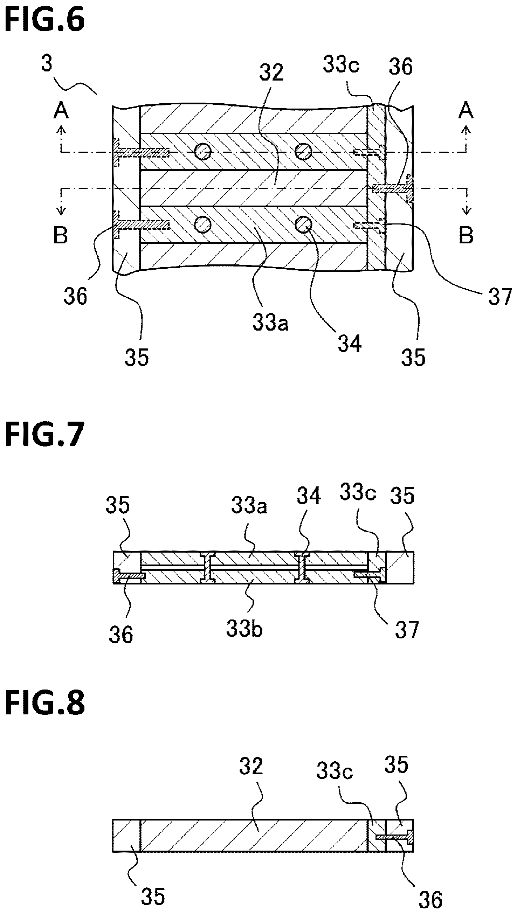

FIG. 6 is an enlarged top view of a low-speed rotor in a magnetic geared rotary machine according to embodiment 2. The configuration of the magnetic geared rotary machine of the present embodiment is similar to that of the magnetic geared rotary machine of embodiment 1. In the magnetic geared rotary machine of the present embodiment, the structure of the low-speed rotor is different from that of the low-speed rotor of embodiment 1.

As shown in FIG. 6, in the low-speed rotor 3 of the present embodiment, an axial fastening spacer 33c is further included in the structure of the low-speed rotor of embodiment 1. The axial fastening spacer 33c is installed between the end ring 35 and one end composed of the radially outer spacers 33a, the radially inner spacers 33b, and the magnetic-pole pieces 32. The axial fastening spacer 33c has an annular shape, and is fixed to the radially inner spacers 33b by fixing bolts 37.

FIG. 7 is a cross-sectional view taken along line A-A in FIG. 6. As shown in FIG. 7, in the low-speed rotor 3 of the present embodiment, the axial fastening spacer 33c is installed between the end ring 35 and the other end composed of the radially outer spacer 33a and the radially inner spacer 33b. The axial fastening spacer 33c is fixed to the radially inner spacer 33b by the fixing bolt 37.

FIG. 8 is a cross-sectional view taken along line B-B in FIG. 6. As shown in FIG. 8, in the low-speed rotor 3 of the present embodiment, the axial fastening spacer 33c is installed between the end ring 35 and the other end of the magnetic-pole piece 32. The axial fastening spacer 33c is fixed to the end ring 35 by the axial fastening bolt 36.

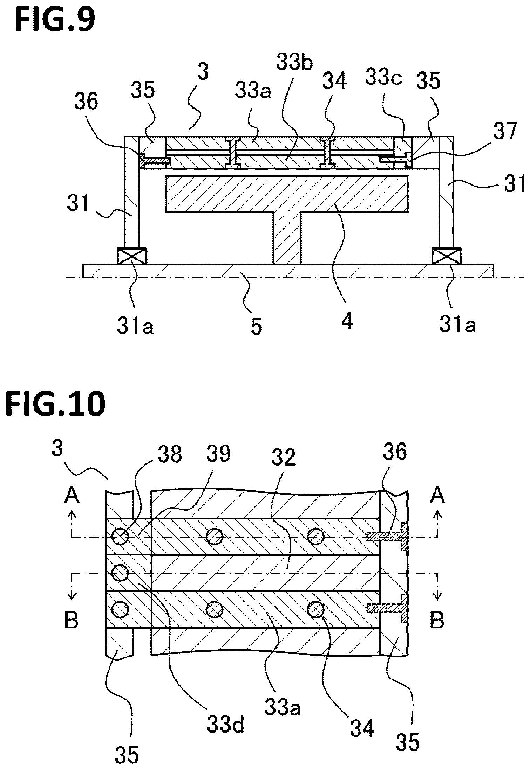

FIG. 9 is a cross-sectional view of the magnetic geared rotary machine according to the present embodiment. FIG. 9 shows the upper half of the cross section parallel to the rotary shaft 5. The stator is now shown. As shown in FIG. 9, the end rings 35 at both ends of the low-speed rotor 3 are fixed to the low-speed rotor end plates 31. The low-speed rotor end plates 31 are rotatably supported on the rotary shaft 5 via bearings 31a. The high-speed rotor 4 is installed radially inward of the low-speed rotor 3.

In the low-speed rotor 3 configured as described above, the spacers 33 are fastened in the axial direction by the axial fastening bolts 36, thereby improving stiffness in the axial direction. In addition, the radially outer spacers 33a and the radially inner spacers 33b are fastened together in the radial direction by the spacer fastening bolts 34, thereby improving stiffness in the radial direction.

Further, in the low-speed rotor 3 of the present embodiment, the radially outer spacers 33a and the radially inner spacers 33b are fastened together in the radial direction by the spacer fastening bolts 34, and thus circumferential compression force acts on the magnetic-pole pieces 32. As a result, the relative vibration generated between the magnetic-pole pieces 32 and the spacers 33 can be suppressed.

Furthermore, in the low-speed rotor 3 of the present embodiment, radial and circumferential fastening loads are applied to the magnetic-pole pieces 32 by the radially outer spacers 33a and the radially inner spacers 33b. In addition, an axial fastening load is applied to the magnetic-pole pieces 32 by the end rings 35 and the axial fastening spacer 33c. That is, in the low-speed rotor 3 of the present embodiment, the loads are applied to the magnetic-pole pieces 32 from three directions: the radial direction, the axial direction, and the circumferential direction, thereby achieving gap-free assembly. As a result, the low-speed rotor 3 of the present embodiment experiences increased frictional force and restraining force due to compression forces applied from three directions to the magnetic-pole pieces 32, thereby improving assembly stiffness.

### Embodiment 3

FIG. 10 is an enlarged top view of a low-speed rotor in a magnetic geared rotary machine according to embodiment 3. The configuration of the magnetic geared rotary machine of the present embodiment is similar to that of the magnetic geared rotary machine of embodiment 1. In the magnetic geared rotary machine of the present embodiment, the structure of the low-speed rotor is different from that of the low-speed rotor of embodiment 1.

As shown in FIG. 10, in the low-speed rotor 3 of the present embodiment, one end of each radially inner spacer 33b extends to the radially outer side of the end ring 35 so as to form an extension portion 39. In addition, an end spacer 33d is provided between the end ring 35 and one end of the magnetic-pole piece 32. The end spacer 33d is provided at one end of each magnetic-pole piece 32, but only one end spacer 33d is shown in FIG. 10.

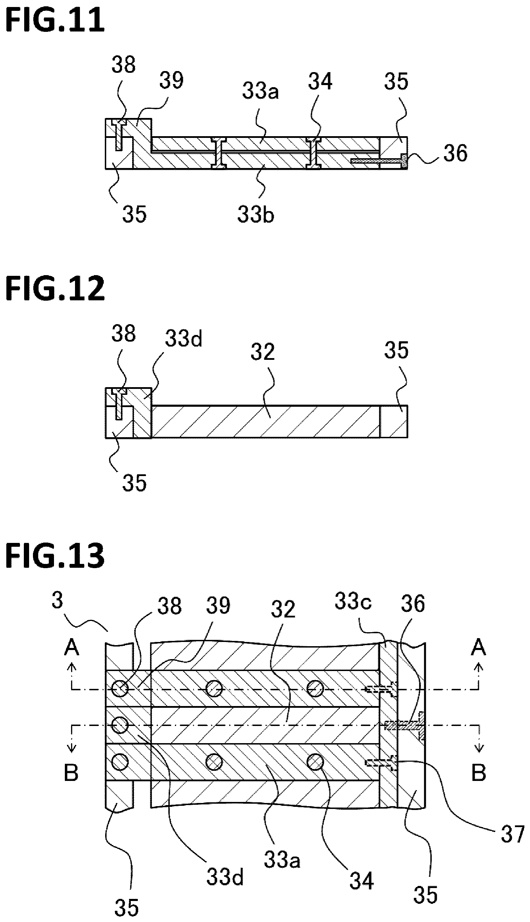

FIG. 11 is a cross-sectional view taken along line A-A in FIG. 10. As shown in FIG. 11, one end of the radially inner spacer 33b of the present embodiment extends to the radially outer side of the end ring 35 so as to form the extension portion 39. The radially inner spacer 33b is fixed to the end ring 35 from the radially outer side by a radial fastening bolt 38. The other end of the radially inner spacer 33b is fixed to the end ring 35 by the axial fastening bolt 36. The radially outer spacer 33a and the radially inner spacer 33b are fastened together by the spacer fastening bolts 34.

FIG. 12 is a cross-sectional view taken along line B-B in FIG. 10. As shown in FIG. 12, the end spacer 33d is provided between the end ring 35 and one end of the magnetic-pole piece 32. The end spacer 33d extends to the radially outer side of the end ring 35. The end spacer 33d is fixed to the end ring 35 from the radially outer side by the radial fastening bolt 38.

In the low-speed rotor 3 configured as described above, the radially outer spacers 33a and the radially inner spacers 33b are firmly fastened together by the spacer fastening bolts 34, whereby it is possible to cause circumferential compression force to act on the magnetic-pole pieces 32. As shown in FIG. 11, the spacer 33 can be fastened to the end ring 35 from the radially outer side by using the radial fastening bolt 38. Thus, assembling workability for the low-speed rotor 3 is improved.

Further, in the low-speed rotor 3 configured as described above, the spacers 33 are fastened in the axial direction by the axial fastening bolts 36, thereby improving stiffness in the axial direction. In addition, the radially outer spacers 33a and the radially inner spacers 33b are fastened together in the radial direction by the spacer fastening bolts 34, thereby improving stiffness in the radial direction.

Furthermore, in the low-speed rotor 3 of the present embodiment, the radially outer spacers 33a and the radially inner spacers 33b are fastened together in the radial direction by the spacer fastening bolts 34, and thus circumferential compression force acts on the magnetic-pole pieces 32. As a result, the relative vibration generated between the magnetic-pole pieces 32 and the spacers 33 can be suppressed.

In the low-speed rotor of the present embodiment, one end of each radially inner spacer extends to the radially outer side of the end ring. As another configuration, one end of each radially outer spacer may extend to the radially outer side of the end ring. In both configurations, each spacer can be fastened to the end ring from the radially outer side by using the radial fastening bolt. Thus, assembling workability for the low-speed rotor is improved.

In addition, in the low-speed rotor of the present embodiment, one end of each radially inner spacer extends to the radially outer side of the end ring. As another configuration, both ends of the radially inner spacer 33b may extend to the radially outer side of the end ring. Even in this configuration, each spacer can be fastened to the end rings from the radially outer side by using the radial fastening bolts. Thus, assembling workability for the low-speed rotor is improved.

### Embodiment 4

FIG. 13 is an enlarged top view of a low-speed rotor in a magnetic geared rotary machine according to embodiment 4. The configuration of the magnetic geared rotary machine of the present embodiment is similar to that of the magnetic geared rotary machine of embodiment 1. In the magnetic geared rotary machine of the present embodiment, the structure of the low-speed rotor is different from that of the low-speed rotor of embodiment 1.

As shown in FIG. 13, in the low-speed rotor 3 of the present embodiment, the axial fastening spacer 33c is further included in the structure of the low-speed rotor of embodiment 3. The axial fastening spacer 33c is installed between the end ring 35 and the other end composed of the radially outer spacers 33a, the radially inner spacers 33b, and the magnetic-pole pieces 32. The axial fastening spacer 33c has an annular shape, and is fixed to the radially inner spacers 33b by the fixing bolts 37.

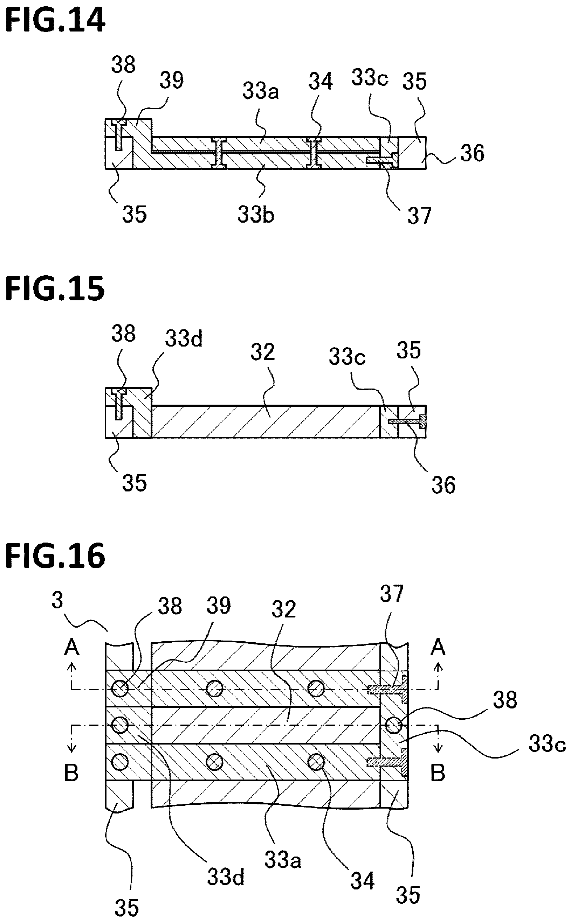

FIG. 14 is a cross-sectional view taken along line A-A in FIG. 13. As shown in FIG. 14, in the low-speed rotor 3 of the present embodiment, the axial fastening spacer 33c is installed between the end ring 35 and the other end composed of the radially outer spacer 33a and the radially inner spacer 33b. The axial fastening spacer 33c is fixed to the radially inner spacer 33b by the fixing bolt 37.

FIG. 15 is a cross-sectional view taken along line B-B in FIG. 13. As shown in FIG. 15, in the low-speed rotor 3 of the present embodiment, the axial fastening spacer 33c is installed between the end ring 35 and the other end of the magnetic-pole piece 32. The axial fastening spacer 33c is fixed to the end ring 35 by the axial fastening bolt 36.

In the low-speed rotor 3 configured as described above, the spacers 33 are fastened in the axial direction by the axial fastening bolts 36, thereby improving stiffness in the axial direction. In addition, the radially outer spacers 33a and the radially inner spacers 33b are fastened together in the radial direction by the spacer fastening bolts 34, thereby improving stiffness in the radial direction.

In addition, in the low-speed rotor 3 of the present embodiment, the radially outer spacers 33a and the radially inner spacers 33b are fastened together in the radial direction by the spacer fastening bolts 34, and thus circumferential compression force acts on the magnetic-pole pieces 32. As a result, the relative vibration generated between the magnetic-pole pieces 32 and the spacers 33 can be suppressed.

Further, in the low-speed rotor 3 of the present embodiment, the radially inner spacers 33b are fixed to the end ring 35 from the radially outer side by using the radial fastening bolts 38, thereby improving assembling workability for the low-speed rotor 3.

Furthermore, in the low-speed rotor 3 of the present embodiment, the axial fastening spacer 33c is installed between the end ring 35 and the other end composed of the radially outer spacers 33a, the radially inner spacers 33b, and the magnetic-pole pieces 32, and thus a uniform axial fastening load is applied to the spacers 33 and the magnetic-pole pieces 32.

### Embodiment 5

FIG. 16 is an enlarged top view of a low-speed rotor in a magnetic geared rotary machine according to embodiment 5. The configuration of the magnetic geared rotary machine of the present embodiment is similar to that of the magnetic geared rotary machine of embodiment 1. In the magnetic geared rotary machine of the present embodiment, the structure of the low-speed rotor is different from that of the low-speed rotor of embodiment 1.

As shown in FIG. 16, in the low-speed rotor 3 of the present embodiment, the axial fastening spacer 33c is further included in the structure of the low-speed rotor of embodiment 3. The axial fastening spacer 33c is installed axially outward of the other end composed of the radially outer spacers 33a, the radially inner spacers 33b, and the magnetic-pole pieces 32. The end ring 35 is installed radially inward of the axial fastening spacer 33c. The axial fastening spacer 33c has an annular shape, and is fixed to the radially inner spacers 33b by the fixing bolts 37. Further, the axial fastening spacer 33c is fixed to the end ring 35 by the radial fastening bolts 38.

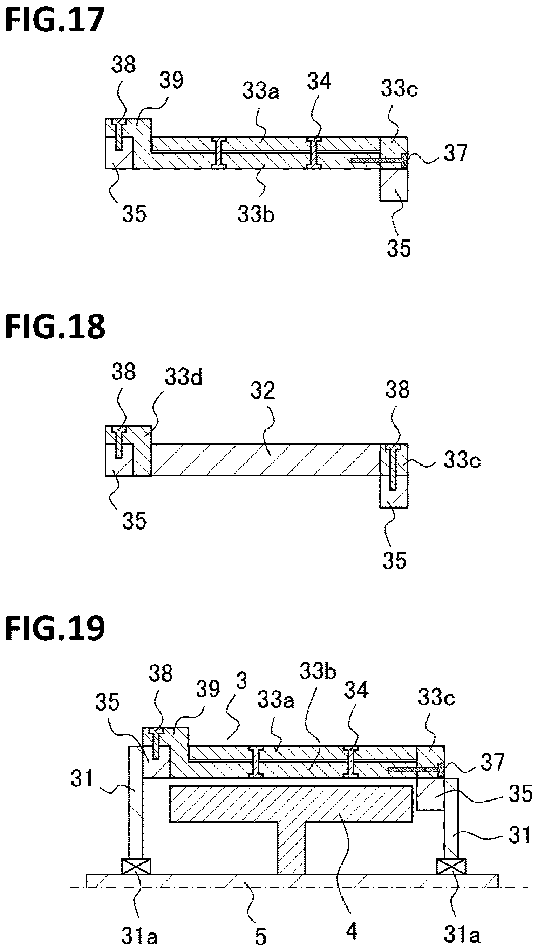

FIG. 17 is a cross-sectional view taken along line A-A in FIG. 16. As shown in FIG. 17, in the low-speed rotor 3 of the present embodiment, the axial fastening spacer 33c is installed axially outward of the other end composed of the radially outer spacer 33a and the radially inner spacer 33b. The axial fastening spacer 33c is fixed to the radially inner spacer 33b by the fixing bolt 37.

FIG. 18 is a cross-sectional view taken along line B-B in FIG. 16. As shown in FIG. 18, in the low-speed rotor 3 of the present embodiment, the axial fastening spacer 33c is installed axially outward of the other end of the magnetic-pole piece 32. The axial fastening spacer 33c is fixed to the end ring 35 by the radial fastening bolt 38.

FIG. 19 is a cross-sectional view of the magnetic geared rotary machine according to the present embodiment. FIG. 19 shows the upper half of the cross section parallel to the rotary shaft 5. The stator is not shown. As shown in FIG. 19, the end rings 35 at both ends of the low-speed rotor 3 are fixed to the low-speed rotor end plates 31. The low-speed rotor end plates 31 are rotatably supported on the rotary shaft 5 via the bearings 31a. The high-speed rotor 4 is installed radially inward of the low-speed rotor 3.

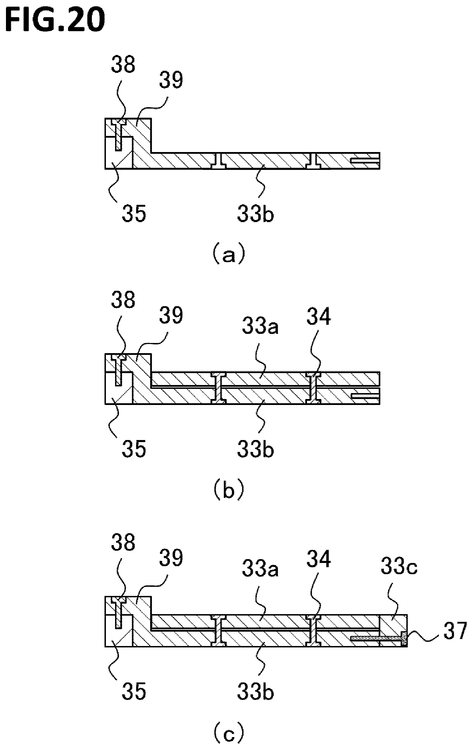

FIG. 20 illustrates a manufacturing process of the low-speed rotor in the present embodiment. As shown in FIG. 20(a), first, the radially inner spacers 33b are fastened to the end ring 35 from the radially outer side. At this time, the radially inner spacers 33b are fastened to the end ring 35 from the radially outer side by the radial fastening bolts 38 at the extension portions 39. Next, although not shown, the magnetic-pole pieces 32 are inserted between the radially inner spacers 33b from the radially outer side. Next, as shown in FIG. 20(b), the radially outer spacers 33a are inserted from the radially outer side, and the radially outer spacers 33a and the radially inner spacers 33b are firmly fastened together by the spacer fastening bolts 34. Finally, as shown in FIG. 20(c), the axial fastening spacer 33c is inserted from the axial outer side, and is fixed to the radially inner spacers 33b from the axial outer side by the fixing bolts 37.

In the low-speed rotor 3 configured as described above, the spacers 33 are fastened in the axial direction by the axial fastening spacer 33c, thereby improving stiffness in the axial direction. In addition, the radially outer spacers 33a and the radially inner spacers 33b are fastened together in the radial direction by the spacer fastening bolts 34, thereby improving stiffness in the radial direction.

In addition, in the low-speed rotor 3 of the present embodiment, the radially outer spacers 33a and the radially inner spacers 33b are fastened together in the radial direction by the spacer fastening bolts 34, and thus circumferential compression force acts on the magnetic-pole pieces 32. As a result, the relative vibration generated between the magnetic-pole pieces 32 and the spacers 33 can be suppressed.

In addition, in the low-speed rotor 3 of the present embodiment, the radially inner spacers 33b and the axial fastening spacer 33c are fixed to the end ring 35 from the radially outer side by using the radial fastening bolts 38, thereby improving assembling workability for the low-speed rotor 3.

### Embodiment 6

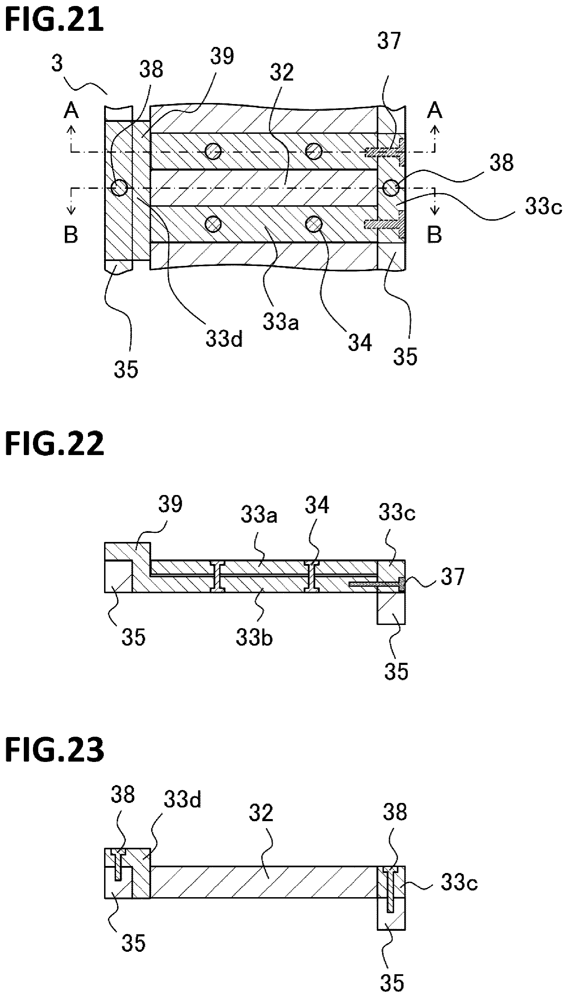

FIG. 21 is an enlarged top view of a low-speed rotor in a magnetic geared rotary machine according to embodiment 6. The configuration of the magnetic geared rotary machine of the present embodiment is similar to that of the magnetic geared rotary machine of embodiment 1. In the magnetic geared rotary machine of the present embodiment, the structure of the low-speed rotor is different from that of the low-speed rotor of embodiment 1.

As shown in FIG. 21, in the low-speed rotor 3 of the present embodiment, the extension portions 39 obtained by extending the respective ends on one side of two radially inner spacers 33b arranged in the circumferential direction to the radially outer side of the end ring 35, in the low-speed rotor of embodiment 5, are integrated with the end spacer 33d provided between the end ring 35 and one end of the magnetic-pole piece 32. That is, in the low-speed rotor of the present embodiment, the extension portions 39 that are adjacent in the circumferential direction are coupled. The end spacer 33d integrated with the extension portions 39 is fixed to the end ring 35 from the radially outer side by the radial fastening bolt 38.

FIG. 22 is a cross-sectional view taken along line A-A in FIG. 21. As shown in FIG. 22, in the low-speed rotor 3 of the present embodiment, the axial fastening spacer 33c is installed axially outward of the other end composed of the radially outer spacer 33a and the radially inner spacer 33b. The axial fastening spacer 33c is fixed to the radially inner spacer 33b by the fixing bolt 37. The end ring 35 at the other end is installed radially inward of the axial fastening spacer 33c.

FIG. 23 is a cross-sectional view taken along line B-B in FIG. 21. As shown in FIG. 23, in the low-speed rotor 3 of the present embodiment, the axial fastening spacer 33c is installed axially outward of the other end of the magnetic-pole piece 32. The axial fastening spacer 33c is fixed to the end ring 35 by the radial fastening bolt 38.

In the low-speed rotor 3 configured as described above, the spacers 33 are fastened in the axial direction by the axial fastening bolts 36, thereby improving stiffness in the axial direction. In addition, the radially outer spacers 33a and the radially inner spacers 33b are fastened together in the radial direction by the spacer fastening bolts 34, thereby improving stiffness in the radial direction.

In addition, in the low-speed rotor 3 of the present embodiment, the radially outer spacers 33a and the radially inner spacers 33b are fastened together in the radial direction by the spacer fastening bolts 34, and thus circumferential compression force acts on the magnetic-pole pieces 32. As a result, the relative vibration generated between the magnetic-pole pieces 32 and the spacers 33 can be suppressed.

In addition, in the low-speed rotor 3 of the present embodiment, the radially inner spacers 33b and the axial fastening spacer 33c are fixed to the end ring 35 from the radially outer side by using the radial fastening bolts 38, thereby improving assembling workability for the low-speed rotor 3. In addition, the two radially inner spacers 33b arranged in the circumferential direction are integrated, resulting in a reduction in the number of components.

In the low-speed rotor of the present embodiment, the extension portions obtained by extending the respective ends on one side of two radially inner spacers arranged in the circumferential direction to the radially outer side of the end ring, are integrated with the end spacer provided between the end ring and one end of the magnetic-pole piece. As another configuration, the extension portions obtained by extending the respective ends on one side of three or more radially inner spacers arranged in the circumferential direction to the radially outer side of the end ring, may be integrated with the end spacers provided between the end ring and the respective ends on one side of the magnetic-pole pieces. This configuration allows a further reduction in the number of components.

Although the present disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: frame
- 2: stator
- 3: low-speed rotor
- 4: high-speed rotor
- 10: magnetic geared rotary machine
- 21: stator core
- 22: stator winding
- 23: stator magnet
- 31: low-speed rotor end plate
- 31a: bearing
- 32: magnetic-pole piece
- 32a: radially outer inclined surface
- 32b: radially inner inclined surface
- 33: spacer
- 33a: radially outer spacer
- 33b: radially inner spacer
- 33c: axial fastening spacer
- 33d: end spacer
- 34: spacer fastening bolt
- 35: end ring
- 36: axial fastening bolt
- 37: fixing bolt
- 38: radial fastening bolt
- 39: extension portion
- 41: high-speed rotor core
- 42: rotor magnet

## Claims

1. A magnetic geared rotary machine in which a stator including a stator core, a stator winding, and a stator magnet, a low-speed rotor including a magnetic-pole piece and a spacer, and a high-speed rotor including a rotor core and a rotor magnet are coaxially arranged with gaps therebetween, wherein
the low-speed rotor includes a plurality of the magnetic-pole pieces and a plurality of the spacers arranged alternately in contact with each other in a circumferential direction,
each of the spacers includes a radially outer spacer and a radially inner spacer,
the radially outer spacers and the radially inner spacers are fastened together in a radial direction by spacer fastening bolts,
side surfaces of the magnetic-pole pieces that are in contact with the radially outer spacers form radially outer inclined surfaces such that a circumferential-direction distance between adjacent ones of the magnetic-pole pieces is increased toward a radially outer side, and
side surfaces of the magnetic-pole pieces that are in contact with the radially inner spacers form radially inner inclined surfaces such that a circumferential-direction distance between adjacent ones of the magnetic-pole pieces is increased toward a radially inner side.

2. The magnetic geared rotary machine according to claim 1, wherein
the low-speed rotor further includes an end ring at an end in an axial direction thereof,
an end in the axial direction of at least one of the radially outer spacer and the radially inner spacer of each spacer includes an extension portion extended to the radially outer side of the end ring, and
the spacer is fastened to the end ring from the radially outer side of the extension portion by a radial fastening bolt.

3. The magnetic geared rotary machine according to claim 2, wherein
among the extension portions, ones that are adjacent in the circumferential direction are coupled.
